# EUROPEAN PATENT APPLICATION

(11) **EP 3 594 566 A1**
(43) Date of publication of application: **15.01.2020**
(21) Application number: 19185045.2
(22) Date of filing: 08.07.2019
(51) Int. Cl.: F21V 8/00, G02B 5/00, G02F 1/1335

(54) **DISPLAY DEVICE HAVING LIGHT GUIDE PLATE**

(30) Priority: 09.07.2018 KR 20180079417
(71) Applicant: Samsung Display Co., Ltd., Gyeonggi-Do (KR)
(72) Inventor: PARK, Young-min, Gyeonggi-Do (KR); NAM, Jieun, Seoul (KR); KIM, Dohun, Gyeonggi-Do (KR); KIM, Hyuk-hwan, Gyeonggi-do (KR)
(74) Representative: Taor, Simon Edward William

(57) **Abstract**

A display device includes a display panel. A light source is configured to output light having a first color. A light guide plate is disposed below the display panel and includes an incident surface into which the first color light is incident, an opposite surface that is opposite to the incident surface, and an emission surface facing the display panel. A color convertor is disposed between the display panel and the light guide plate. The color convertor is configured to absorb the first color light and to output light having a different color to the display panel. A reflector is disposed below the light guide plate. A first reflection area and an adjacent second reflection area are defined on the reflector. A light absorber is disposed on the first reflection area adjacent to the light source. The light absorber is configured to absorb the first color light.

## Description

### TECHNICAL FIELD

The present disclosure herein relates to a display device, and more particularly, to a display device having a light guide plate.

### DISCUSSION OF THE RELATED ART

Display devices are widely used in various electronic devices. Such display devices may include a plurality of thin film transistors for turning on/off of a voltage for each pixel thereof.

As some type of display panels used in display devices are not capable of producing their own light, display devices may include a light source for providing light to the display panel. The light source may include a light emitting element and a light guide plate. The light source may produce the light while the light guide plate may carry the light produced by the light source and distribute it evenly across the entire display panel.

However, conventional light guide plates might not provide an even distribution of light across the entire display panel and this might lead to bright spots and/or dark spots on the image display thereof. In particular, as light is directed from the light source to the light guide plate, some of this light may enter the light guide plate at an angle that causes the light to take an undesirable path through the light guide plate and this may result in light leakage from the light guide plate, which may in turn contribute to bright and/or dark spots in the display device.

### SUMMARY

A display device includes a display panel. A light source is configured to output light having a first color. A light guide plate is disposed below the display panel and includes an incident surface into which the first color light is incident, an opposite surface that is opposite to the incident surface, and an emission surface facing the display panel. A color convertor is disposed between the display panel and the light guide plate. The color convertor is configured to absorb the first color light and to output light having a color different from the first color to the display panel. A reflector is disposed below the light guide plate. A first reflection area and a second reflection area adjacent to the first reflection area are defined on the reflector. A light absorber is disposed on the first reflection area adjacent to the light source. The light absorber is configured to absorb the first color light.

A display device includes a display panel. A first light source is configured to output a first color light. A second light source is configured to output the first color light. A light guide plate is disposed below the display panel and includes an incident surface facing the first light source, an opposite surface facing the second light source, and an emission surface facing the display panel. A color convertor is disposed between the display panel and the light guide plate and is configured to absorb the first color light from the first light source and the second light source and to output light having a color different from the first color to the display panel. A reflector is disposed below the light guide plate. On the reflector, a first reflection area, a second reflection area, and a third reflection area facing the first reflection area with the second reflection area therebetween are defined. A first light absorber is disposed on the first reflection area adjacent to the first light source and configured to absorb the first color light. A second light absorber is disposed on the third reflection area adjacent to the second light source and is configured to absorb the first color light.

A display device include a display panel. A light source is configured to output a first color light. A light guide plate is disposed below the display panel and includes an incident surface into which the first color light is incident, an opposite surface that is opposite to the incident surface, and an emission surface facing the display panel. A reflector is disposed below the light guide plate. A light absorber is disposed on one area of the reflector adjacent to the light source and is configured to absorb the first color light.

According to an aspect of the invention, there is provided a display device as set out in claim 1. Preferred features of this aspect are set out in claims 2 to 15.

### BRIEF DESCRIPTION OF THE FIGURES

The accompanying drawings are included to provide a further understanding of the inventive concept, and are incorporated in and constitute a part of this specification. The drawings illustrate exemplary embodiments of the inventive concept and, together with the description, serve to explain principles of the inventive concept. In the drawings:
FIG. 1 is a perspective view illustrating a display device according to an exemplary embodiment of the inventive concept;
FIG. 2 is an exploded perspective view illustrating the display device according to an exemplary embodiment of the inventive concept;
FIG. 3 is a cross-sectional view taken along line I-I' of FIG. 2;
FIG. 4 is an exploded perspective view illustrating a light guide plate and a color convertor according to an exemplary embodiment of the inventive concept;
FIG. 5 is a cross-sectional view taken along line II-II' of FIG. 4;
FIG. 6 is an enlarged view illustrating a region AA of FIG. 3;
FIG. 7 is a plan view illustrating a reflector according to an exemplary embodiment of the inventive concept;
FIG. 8 is an enlarged view illustrating a region BB of FIG. 7;
FIG. 9A is a graph illustrating brightness on an emission surface of the light guide plate according to an exemplary embodiment of the inventive concept;
FIG. 9B is a graph illustrating a color coordinate of light emitted from the emission surface of the light guide plate according to an exemplary embodiment of the inventive concept;
FIG. 10A is a cross-sectional view illustrating a portion of a display device according to an exemplary embodiment of the inventive concept;
FIG. 10B is a plan view illustrating a reflector of FIG. 10A;
FIG. 11 is a cross-sectional view illustrating the display device according to an exemplary embodiment of the inventive concept;
FIG. 12 is an enlarged view illustrating a region CC of FIG. 11;
FIG. 13A is a plan view illustrating a reflector according to an exemplary embodiment of the inventive concept;
FIG. 13B is a plan view illustrating a reflector according to an exemplary embodiment of the inventive concept;
FIG. 13C is a plan view illustrating a reflector according to an exemplary embodiment of the inventive concept;
FIG. 14 is an exploded perspective view illustrating a display device according to an exemplary embodiment of the inventive concept; and
FIG. 15 is a plan view illustrating a reflector according to an exemplary embodiment of the inventive concept.

### DETAILED DESCRIPTION

In describing exemplary embodiments of the present disclosure illustrated in the drawings, specific terminology is employed for sake of clarity. However, the present disclosure is not intended to be limited to the specific terminology so selected, and it is to be understood that each specific element includes all technical equivalents which operate in a similar manner.

In this specification, it will also be understood that when one component (or region, layer, portion) is referred to as being 'on', 'connected to', or 'coupled to' another component, it can be directly disposed/connected/coupled on/to the one component, or an intervening third component may also be present.

Like reference numerals may refer to like elements throughout the specification and drawings.

It will be understood that although the terms such as 'first' and 'second' are used herein to describe various elements, these elements should not be limited by these terms. The terms are only used to distinguish one component from other components. For example, a first element referred to as a first element in one embodiment can be referred to as a second element elsewhere in the specification without departing from the scope of the present disclosure. The terms of a singular form may include plural forms unless referred to the contrary.

Hereinafter, exemplary embodiments of the inventive concept will be described with reference to the accompanying drawings.

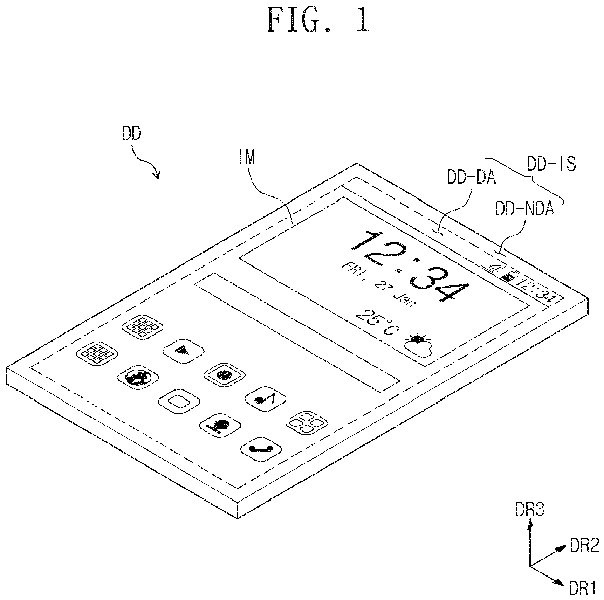

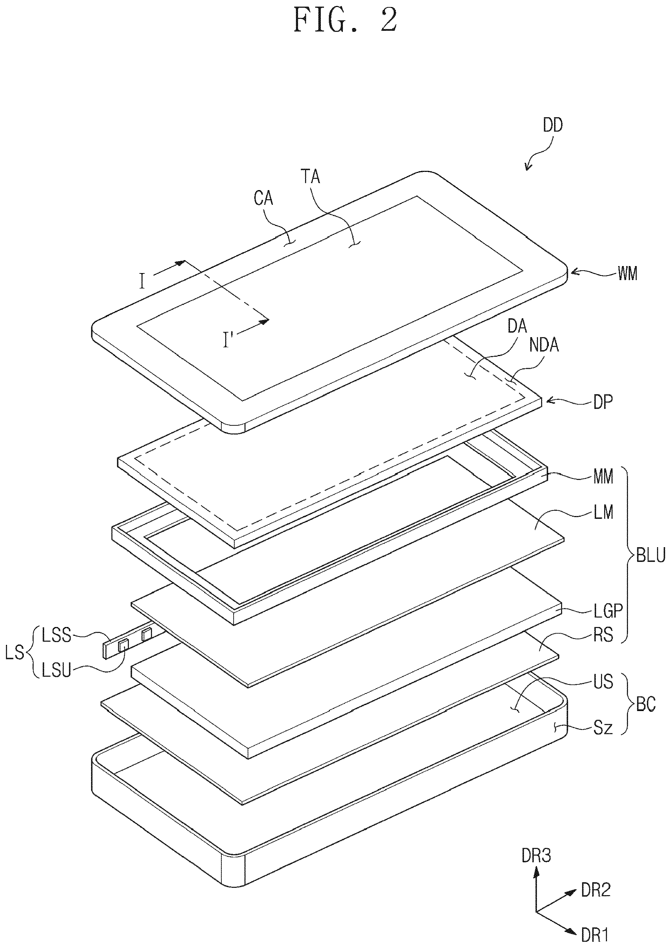

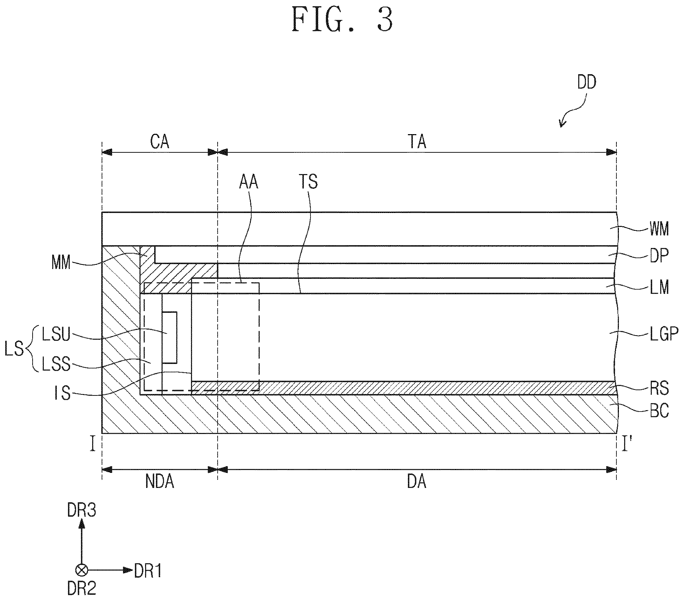

FIG. 1 is a perspective view illustrating a display device according to an exemplary embodiment of the inventive concept. FIG. 2 is an exploded perspective view illustrating the display device according to an exemplary embodiment of the inventive concept. FIG. 3 is a cross-sectional view taken along line I-I' of FIG. 2.

Referring to FIG. 1, a display device DD may display an image IM through a display surface DD-IS. The display surface DD-IS may be in a plane defined by a first direction DR1 and a second direction DR2. A normal direction of the display surface DD-IS, e.g., a thickness direction of the display device DD is indicated as a third direction DR3.

A front surface (or a top surface) and a rear surface (or a bottom surface) of each member or unit, which will be described below, are distinguished by the third direction DR3. However, the first to third directions DR1, DR2, and DR3 shown in the figures may be exemplary, and directions indicated by the first to third directions DR1, DR2, and DR3 may be changed into opposite directions.

According to an exemplary embodiment of the inventive concept, although the display surface DD-IS has a rectangular shape in FIG. 1, embodiments of the inventive concept are not limited thereto. For example, at least a portion of the display surface DD-IS may be curved on a plane.

For example, the display surface DD-IS may include a first side extending in the first direction DR1, a second side extending in the second direction DR2, a third side extending in the first direction to face the first side, and a fourth side extending in the second direction DR2 to face the second side on the plane. Also, the display surface DD-IS includes a first curve connecting the first side to the second side, a second curve connecting the second side to the third side, a third curve connecting the third side to the fourth side, and a fourth curve connecting the fourth side to the first side. The first to fourth curves may correspond to corners of the display surface DD-IS, respectively.

According to an exemplary embodiment of the present invention, although the display device DD having the planar display surface is illustrated, embodiments of the inventive concept are not limited thereto. The display device DD may include a curved display surface or a solid display surface. The solid display surface may include a plurality of display areas extending in different directions. For example, the solid display surface may include a polygonal column-type display surface.

The display device DD, according to an exemplary embodiment, may be a rigid display device. However, embodiments of the inventive concept are not limited thereto. For example, the display device DD, according to exemplary embodiments of the inventive concept, may be a flexible display device. The display device DD that is capable of being applied to a mobile terminal is exemplarily illustrated. Electronic modules, a camera module, a power module, and the like, which are mounted on a main board, may be disposed on a bracket/case together with the display device DD to constitute the mobile terminal. The display device DD, according to an exemplary embodiment of the inventive concept, may be applied to large-sized electronic devices such as televisions and monitors and small and middle-sized electronic devices such as tablet PC, navigation units for vehicles, game consoles, and smart watches and other wearables.

The display surface DD-IS includes a display area DD-DA on which an image IM is displayed and a non-display area DD-NDA that is adjacent to the display area DD-DA. The non-display area DD-NDA may be an area on which an image is not displayed. FIG. 1 illustrates a watch window and an icon as examples of the image IM.

As illustrated in FIG. 1, the non-display area DD-NDA at least partially surrounds the display area DD-DA. However, embodiments of the inventive concept are not limited thereto. For example, the display area DD-DA and the non-display area DD-NDA may be relatively designed in shape. For example, the non-display area DD-NDA may be disposed adjacent to only one side of the display area DD-DA or omitted.

Referring to FIGS. 2 and 3, the display device DD may include a window WM, a display panel DP, a backlight BLU, and an accommodation frame BC.

The window member 100 may include a light transmitting area TA that transmits an image provided from the display panel DP and a light blocking area CA which is disposed adjacent to the light transmitting area TA and through which the image is not transmitted. The light transmitting area TA and the light blocking area CA may correspond to the display area DD-DA and the non-display area DD-NDA of the display device DD of FIG. 1, respectively.

The light transmitting area TA is disposed on a central portion of the display device DD on a plane defined in the first and second directions DR1 and DR2. The light blocking area CA has a frame shape that is disposed adjacent to the light transmitting area TA to at least partially surround the light transmitting area TA. However, embodiments of the inventive concept are not limited thereto. For example, the light blocking area CA may be adjacent to only a portion of the light transmitting area TA or may be omitted. The window member WM may be made of glass, sapphire, plastic, or another suitably transparent material.

The display panel DP is disposed below the window member WM. The display panel DP displays an image by using light provided from the backlight BLU. For example, the display panel DP may be a light-receiving type display panel. For example, according to an exemplary embodiment of the inventive concept, the display panel DP includes a liquid crystal display panel.

The display panel DP includes a display area DA and a non-display area NDA adjacent to the display area DA on the plane. The display area DA and the non-display area NDA of FIG. 2 may overlap the display area DD-DA and the non-display area DD-NDA of FIG. 1, respectively.

The backlight BLU is disposed below the display panel DP to provide light to the display panel DP. Accordingly, the backlight BLU may be an edge-type light source that is disposed adjacent to a side surface of a light guide plate LGP.

The backlight BLU may include a light source LS, a light guide plate LGP, a color convertor LM, a reflector RS, and a mold frame MM.

The light source LS is disposed adjacent to one surface of the light guide plate LGP in the first direction DR1. However, embodiments of the inventive concept are not limited to the position of the light source LS. For example, the light source LS may be disposed adjacent to at least one surface of side surfaces of the light guide plate LGP.

The light source LS includes a plurality of light emitting elements LSU and a circuit substrate LSS. The light emitting elements LSU generate light to be provided to the display panel DP to provide the generated light to the light guide plate LGP.

Accordingly, the light emitting elements LSU may generate a first light. The first light may have a first wavelength band. For example, the first wavelength band may range from about 400 nm to about 500 nm. For example, the first light may be blue light.

Each of the light emitting elements LSU may have a shape in which a light emitting diode (LED) is used as a point light source. However, embodiments of the inventive concept are not limited to the kind of light emitting elements LSU.

Also, embodiments of the inventive concept are not limited to the number of light emitting elements LSU. According to an exemplary embodiment of the inventive concept, the light emitting elements LSU might not be provided in plurality but be provided as a single point light source using the LED. Alternatively, the light emitting elements LSU may be provided as a plurality of LED groups.

The light emitting elements LSU may be mounted on the circuit substrate LSS. The circuit substrate LSS is disposed to face the one side of the light guide plate LGP in the first direction DR1 and extend in the second direction DR2.

The circuit substrate LSS may include a light source controller connected to the light emitting elements LSU. The light source controller may analyze an image displayed on the display panel DM to output a local dimming signal and control luminance of light generated by the light emitting elements LSU in response to the local dimming signal.

The light guide plate LGP may be disposed below the display panel DP. The light guide plate LGP may include a material having high light transmittance in a visible light range. For example, the light guide plate LGP may include a glass material. According to an exemplary embodiment, the light guide plate LGP may be made of a transparent polymer resin such as polymethyl methacrylate (PMMA). According to an exemplary embodiment of the inventive concept, the light guide plate LGP may have a refractive index of about 1.4 to about 1.55.

The color convertor LM may be disposed between the display panel DP and the light guide plate LGP. The color convertor LM may have a bottom surface contacting a top surface of the light guide plate LGP. The color convertor LM may absorb first color light emitted from the light guide plate LGP in a direction of the display panel DP and may emit light having a different color from the first color. According to an exemplary embodiment, the color convertor LM may absorb first color light having a blue color and may emit white light. As a result, the display panel DP may receive the white light emitted from the color convertor LM.

The reflector RS may be disposed below the light guide plate LGP. The reflector RS reflects the light emitted to a lower side of the light guide plate LGP so that the light is emitted upward. The reflector RS includes a light reflective material. For example, the reflector RS may include aluminum or silver. For example, the reflector RS may be provided as a reflection sheet.

The backlight BLU may further include at least one optical sheet disposed between the color convertor LM and the display panel DP. When the optical sheet is provided in plurality, the plurality of optical sheets may include a diffusion sheet, a prism sheet, and a protection sheet. The diffusion sheet may diffuse the light provided from the color convertor LM. The prism sheet may be disposed above the diffusion sheet to collect the light diffused by the diffusion sheet in an upward direction perpendicular to the plane. The protection sheet may protect prisms of the prism sheet against external friction. Embodiments of inventive concept are not limited by the kind and number of sheets.

The mold frame MM is disposed between the display panel DP and the color convertor LM. Where the display device DD includes the above-described optical sheets, the mold frame MM may be disposed between the optical sheets and the color convertor LM.

The mold frame MM may have a frame shape. For example, the mold frame MM may be disposed to correspond to an edge area on a top surface of the cover convertor LM. In this case, the mold frame MM might not overlap the display area DA. The display panel DP is disposed on the mold frame MM. The mold frame MM fixes the display panel DP and the backlight BLU.

The accommodation frame BC may be disposed on the lowermost end of the display device DD to accommodate the backlight BLU. The accommodation frame BC includes a bottom part US and a plurality of sidewalls Sz connected to the bottom part US. According to an exemplary embodiment of the inventive concept, the light source LS may be disposed on one inner surface of the plurality of sidewalls Sz of the accommodation frame BC. The accommodation frame BC may be made of a rigid metal material.

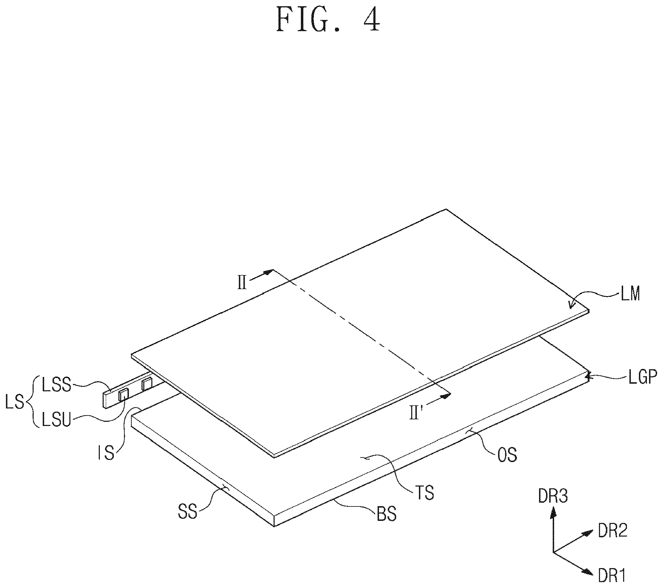

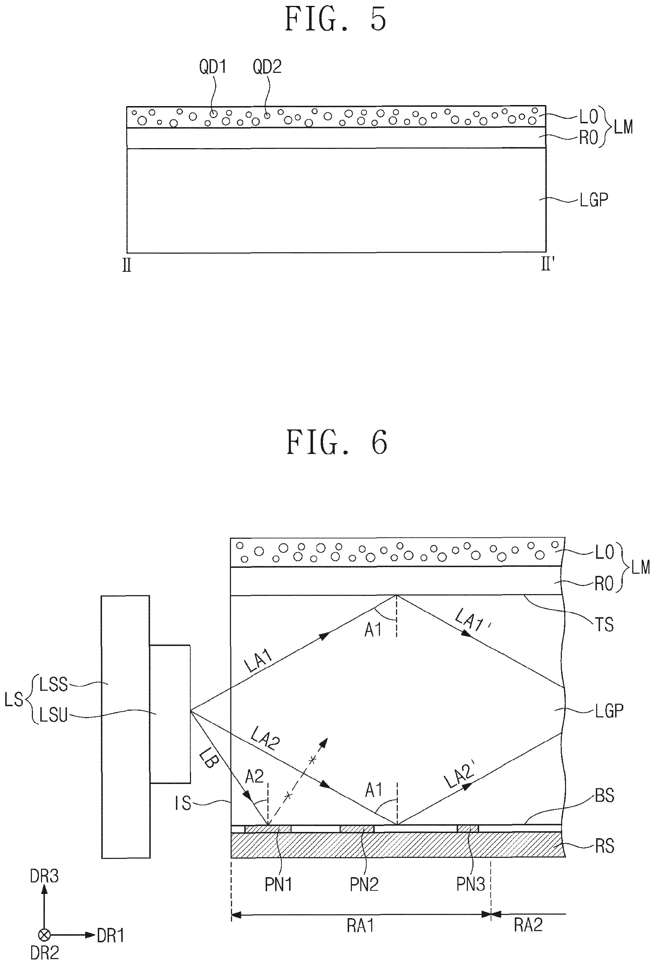

FIG. 4 is an exploded perspective view illustrating a light guide plate and the color convertor according to an exemplary embodiment of the inventive concept. FIG. 5 is a cross-sectional view taken along line II-II' of FIG. 4.

Referring to FIG. 4, the light guide plate LGP includes an emission surface TS, a bottom surface BS, and a plurality of side surfaces (see reference symbols IS, SS, and OS of FIGS. 2 and 4) connecting the emission surface TS to the bottom surface BS. The side surface of the side surfaces IS, SS, and OS, which faces the light source LS, is defined as an incident surface IS, and a surface opposite to the incident surface IS in the first direction DR1 is defined as an opposite surface OS.

The light guide plate LGP may include a plurality of light emitting patterns disposed on the emission surface TS or a bottom surface thereof. The light emitting patterns may refract light incident into the emission surface TS or the bottom surface of the light guide plate LGP to change a reflection angle. The light emitting patterns may have an embossed or depressed shape on the emission surface TS or the bottom surface.

As illustrated in FIG. 5, the color convertor LM may be disposed on the light guide plate LGP. For example, the color convertor LM may be attached to the emission surface TS of the light guide plate LGP. According to exemplary embodiments of the inventive concept, the color convertor LM includes a low-refractive index layer RO and a light conversion layer LO.

The low-refractive index layer RO is disposed on the emission surface TS of the light guide plate LGP. According to an exemplary embodiment, the low-refractive index layer RO has a refractive index that is less than that of the light guide plate LGP. For example, the low-refractive index layer RO may have a refractive index of about 1.1 to about 1.3 and a thickness of about 0.5 µm or more. As described above, since the light guide plate LGP has a refractive index of about 1.4 to about 1.55, the light guide plate LGP may have a refractive index that is greater than that of the low-refractive index layer RO.

Light provided from the light source LS to the light guide plate LGP is totally reflected within the light guide plate LGP due to a difference in refractive index between the low-refractive index layer RO and the light guide plate LGP on an interface between the low-refractive index layer RO and the light guide plate LGP. For example, the light incident into the incident surface IS of the light guide plate LGP may be totally reflected to be transmitted up to the opposite surface OS of the light guide plate LGP.

Although the low-refractive index layer RO is disposed on an entire surface of the emission surface TS of the light guide plate LGP, embodiments of the inventive concept are not limited thereto. For example, the low-refractive index layer RO is disposed to overlap a portion of the emission surface TS of the light guide plate LGP. For example, a top surface of the low-refractive index layer RO has a surface area that is less than that of the emission surface TS of the light guide plate LGP.

The light conversion layer LO is disposed on the low-refractive index layer RO. The light conversion layer LO has a refractive index greater than that of the light guide plate LGP. For example, the light conversion layer LO may have a refractive index of about 1.65 or more.

The light conversion layer LO may convert a wavelength band of the incident light. The light conversion layer LO, according to an exemplary embodiment of the inventive concept, may include a plurality of light conversion particles of different types. These light conversion particles may be, for example, quantum dots QD1 and QD2. Each of the quantum dots QD1 and QD2 may absorb at least a portion of the incident light to emit light having a particular color or transmit the light as it is.

When light incident into the light conversion layer LO has sufficient energy for exciting the quantum dots QD1 and QD2, the quantum dots QD1 and QD2 may absorb at least a portion of the incident light and may then be excited and may emit light having a particular color as they relax from the excited state. When the incident light has a color that is difficult to excite the conversion particles, the incident light may pass through the light conversion layer LO as it is and thus will be visible to the outside in its original form.

For example, light emitted by the quantum dots QD1 and QD2 may be converted to a color that is determined according to a size of each of the quantum dots QD1 and QD2. For example, as each of the particles increases in size, light having a longer wavelength is generated. Also, as each of the particles decreases in size, light having a shorter wavelength is generated.

Light emitted from the quantum dots QD1 and QD2 of the light conversion layer LO may be emitted in various directions.

For example, the quantum dots QD1 and QD2 may include first quantum dots QD1 and second quantum dots QD2. Each of the first quantum dots QD1 may absorb the first color light to convert the first color light into light having a first conversion color having a second wavelength band. The second wavelength band has a center wavelength greater than that of the first wavelength band. For example, the second wavelength band may range of about 640 nm to about 780 nm. For example, each of the first quantum dots QD1 may substantially convert blue light into red light.

Each of the second quantum dots QD2 may absorb the first color light to convert the first color light into light having a second conversion color having a third wavelength band. The third wavelength band has a center wavelength greater than that of the first wavelength band and less than that of the second wavelength band. For example, the third wavelength band may range of about 480 nm to about 560 nm. For example, each of the second quantum dots QD2 may substantially convert blue light into green light.

As described above, the light generated by the corresponding conversion particles may be determined in wavelength according to a size of each of the quantum dots QD1 and QD2. Each of the first quantum dots QD1 may have a size greater than that of each of the second quantum dots QD2.

The light conversion layer LO may further include scatterers. The scatterers may have a form that is a mixture of the first quantum dots QD1 and the second quantum dots QD2.

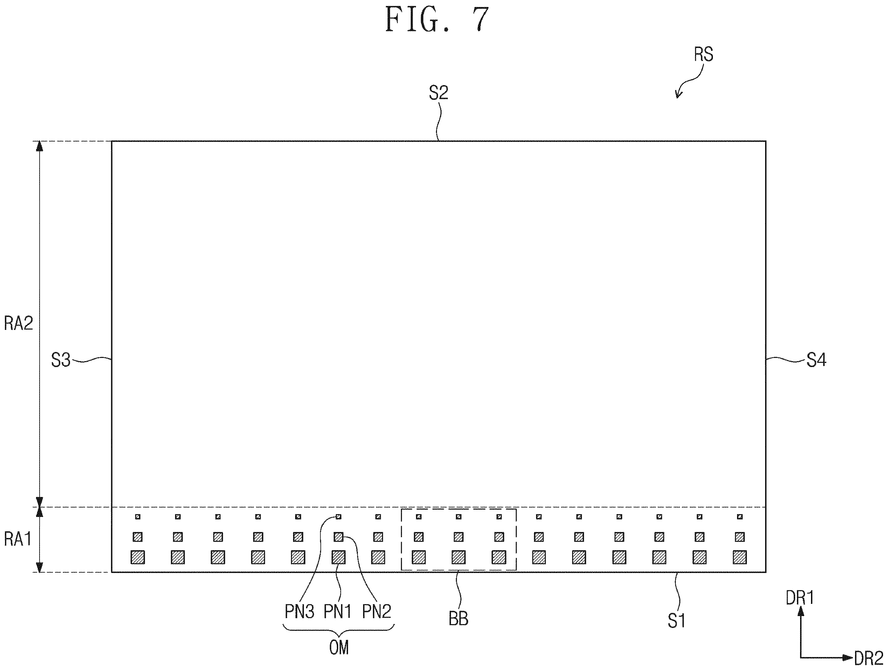

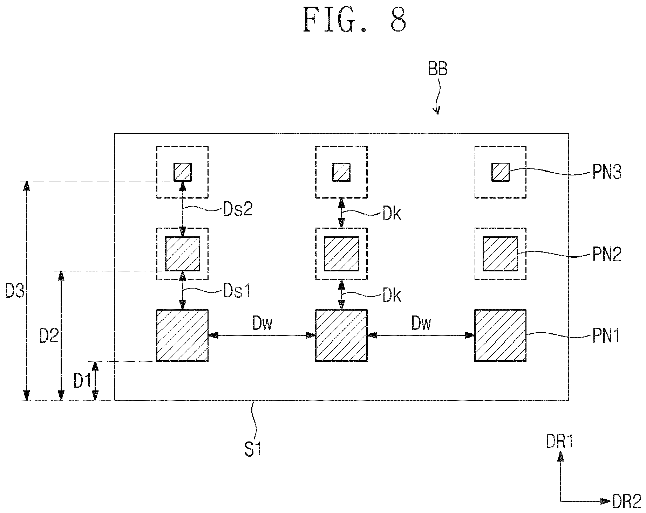

FIG. 6 is an enlarged view illustrating a region AA of FIG. 3. FIG. 7 is a plan view illustrating a reflector according to an exemplary embodiment of the inventive concept. FIG. 8 is an enlarged view illustrating a region BB of FIG. 7.

Referring to FIG. 6, a reflector RS may be disposed on a bottom surface BS of the light guide plate LGP. For example, the reflector RS may overlap the entire bottom surface BS of the light guide plate LGP to reflect light transmitted from the bottom surface BS.

For example, referring to FIG. 7, the reflector RS includes a first end S1 and a second end S2, which face each other in the first direction DR1 and also include a third end S3 and a fourth end S4, which face each other in the second direction DR2. The reflector RS may be defined on a plane defined by the first to fourth ends S1 to S4. In the first to fourth ends S1 to S4, the first end S1 may be closest to the light source LS.

According to an exemplary embodiment of the inventive concept, the reflector RS includes a first reflection area RA1 and a second reflection area RA2 adjacent to the first reflection area RA1. On the plane, the first reflection area RA1 may be closer to the incident surface IS of the light guide plate LGP than the second reflection area RA2, and the second reflection area RA2 may be closer to the opposite surface OS of the light guide plate LGP than the first reflection area RA1. An end of the first reflection area RA1 may correspond to the first end S1 of the reflector RS.

Also, on the plane of the reflector RS, the second reflection area RA2 has a surface area greater than that of the first reflection area RA1. As illustrated in FIG. 7, the first reflection area RA1 and the second reflection area RA2 have the same length in the second direction DR2, but the first reflection area RA1 may have a length less than that of the second reflection area RA2 in the first direction DR2. For example, the first reflection area RA1 may have a length of about 50 mm to about 200 mm in the first direction DR1.

According to an exemplary embodiment of the inventive concept, the display device DD may further include a light absorber OM disposed on the reflector RS. According to an exemplary embodiment, the light absorber OM may include a plurality of printed patterns PN1, PN2, and PN3 disposed on the first reflection area RA1. For example, the printed patterns PN1, PN2, and PN3 may be disposed on the first reflection area RA1 of the reflector RS in an ink type.

The printed patterns PN1, PN2, and PN3 may have a second color that is different from the first color to absorb the first color light emitted from the light emitting element LSU. The second color may be a yellow color having a wavelength band of about 570 nm to about 590 nm. As a result, the first color light transmitted to the first reflection area RA1 through the bottom surface BS of the light guide plate LGP may be absorbed by the printed patterns PN1, PN2, and PN3 and thus might not be reflected again to the bottom surface BS of the light guide plate LGP.

The printed patterns PN1, PN2, and PN3 include first printed patterns PN1, second printed patterns PN2, and third printed patterns PN3. However, embodiments of the inventive concept are not limited thereto. For example, the printed patterns may include a plurality of printed patterns arranged in the first direction DR1.

According to exemplary embodiments of the inventive concept, the first printed patterns PN1 of the printed patterns PN1, PN2, and PN3 may be closest to the light emitting element LSU in the first direction DR1. The first printed patterns PN1 may have the same size and may be arranged at a predetermined interval in the second direction DR2.

The second printed patterns PN2 of the printed patterns PN1, PN2, and PN3 may be spaced further from the light emitting element LSU than the first printed patterns PN1 on the plane in the first direction DR1. The second printed patterns PN2 may have the same size and be arranged at a predetermined interval in the second direction DR2.

The third printed patterns PN3 of the printed patterns PN1, PN2, and PN3 may be spaced further from the light emitting element LSU than the second printed patterns PN2 on the plane in the first direction DR1. The third printed patterns PN3 may have the same size and be arranged at a predetermined interval in the second direction DR2.

Hereinafter, structures of the first to third printed patterns PN1, PN2, and PN3 disposed on the reflector RS will be described in more detail with reference to FIG. 8.

As illustrated in FIG. 8, a distance from the first end S1 of the reflector RS to the first printed patterns PN1 in the first direction DR1 is defined as a first length D1. A distance from the first end S1 of the reflector RS to the second printed patterns PN2 in the first direction DR1 is defined as a second length D2. As illustrated in FIG. 8, a distance from the first end S1 of the reflector RS to the third printed patterns PN3 in the first direction DR1 is defined as a third length D3. In this case, the first length D1 is less than the second length D2, and the second length D2 is less than the third length D3.

According to exemplary embodiments of the inventive concept, the first to third printed patterns PN1, PN2, and PN3 may have surface areas different from each other on the plane of the reflector RS. For example, each of the first printed patterns PN1 may have a surface area greater than that of each of the second printed patterns PN2. Each of the second printed patterns PN2 may have a surface area greater than that of each of the third printed patterns PN3.

According to exemplary embodiments of the inventive concept, a distance between each of the first printed patterns PN and each of the second printed patterns PN2 in the first direction DR1 is defined as a first spaced distance Ds1, and a distance between each of the second printed patterns PN2 and each of the third printed patterns PN3 is defined as a second spaced distance Ds2. In this case, the first spaced distance Ds1 may be less than the second spaced distance Ds2.

According to exemplary embodiments of the inventive concept, the first to third printed patterns PN1, PN2, and PN3 may be arranged at a predetermined interval Dw in the second direction DR2. However, embodiments of the inventive concept are not limited thereto. For example, the structure in which the first to third printed patterns PN1, PN2, and PN3 are arranged in the second direction DR2 may be variously changed.

Referring again to FIG. 6, light emitted from the light emitting element LSU may be incident through the incident surface IS of the light guide plate LGP.

For example, when an angle between a direction of the light incident into the light guide plate LGP and a normal perpendicular to the top surface of the light guide plate LGP is greater than an angle that is defined as a critical angle, the incident light may be totally reflected from the top surface of the light guide plate LGP. When the direction of the incident light is less than the angle defined as the critical angle, the incident light may pass through the light guide plate LGP. Hereinafter, as described with reference to FIG. 4, the top surface of the light guide plate LGP is defined as the emission surface TS.

For example, first upper incident light LA1 of the light incident from the light source LS into the light guide plate LGP has a first angle A1 with respect to the normal perpendicular to the emission surface TS of the light guide plate LGP. The first angle A1 may be greater than the critical angle. Thus, first upper incident light LA1' reflected by the emission surface TS of the light guide plate LGP is provided again into the light guide plate LGP.

First lower incident light LA2 of the light incident from the light source LS into the light guide plate LGP has a first angle A1 with respect to the normal perpendicular to the bottom surface BS of the light guide plate LGP. Thus, first lower incident light LA2' reflected by the bottom surface BS of the light guide plate LGP is provided again into the light guide plate LGP.

First lower incident light LB of the light incident from the light source LS into the light guide plate LGP has a second angle A2 with respect to the normal perpendicular to the bottom surface BS of the light guide plate LGP.

According to an exemplary embodiment in which the printed patterns PN1, PN2, and PN3 are omitted, like the lower incident light LB, light incident at the second angle A2, which is less than the critical angle, into the light guide plate LGP passes through the bottom surface BS of the light guide plate LGP and is then reflected by the reflector RS. In this case, the lower incident light LB reflected by the reflector RS might not be reflected by the emission surface TS of the light guide plate LGP but may pass through the emission surface TS and may then be provided to the light conversion layer LO. As a result, the lower incident light LB that is not guided may be converted in color in the light conversion layer LO and may then be emitted. Thus, light leakage may occur on an edge area of the display panel.

However, according to exemplary embodiments of the inventive concept, the light incident at the second angle A2 into the light guide plate LGP may be absorbed by the printed patterns PN1, PN2, and PN3 disposed on the first reflection area AR1 of the reflector RS, which are adjacent to the light source LS. For example, light incident at an angle, which is less than the critical angle, into the light guide plate LGP may be more likely generated on the first reflection area RA1, which is closer to the light source LS.

Thus, as described with reference to FIG. 8, the first to third printed patterns PN1, PN2, and PN3 having surface areas different from each other may be disposed on the first reflection area RA1. For example, as the surface area of the first printed patterns PN1 closest to the light source LS is the largest, the light incident at an angle, which is less than the critical angle, into the light guide plate LGP may be more easily absorbed.

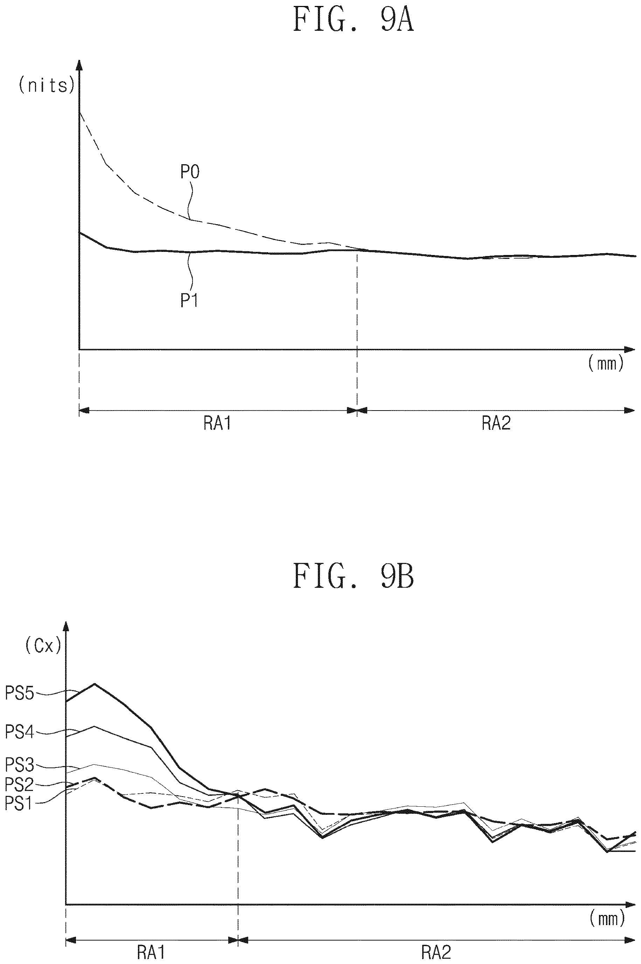

FIG. 9A is a graph illustrating brightness on the emission surface of the light guide plate according to an exemplary embodiment of the inventive concept. FIG. 9B is a graph illustrating a color coordinate of light emitted from the emission surface of the light guide plate according to an exemplary embodiment of the inventive concept.

Referring to FIGS. 3, 7, and 9A, a horizontal axis represents a length (mm) from the first end S1 of the reflector RS in the first direction DR1, and a vertical axis represent brightness (nit) of light emitted from the display panel DP overlapping the first reflection area RA1.

As illustrated in FIG. 9A, in the display panel DP, reference light PI corresponding to target brightness is outputted over the entire display area by external control. However, according to an exemplary embodiment in which the printed patterns PN1, PN2, and PN3 are omitted, the display panel DP may output light PO having first brightness that is greater than the reference brightness on the first reflection area RA1. This is done because the light incident at the angle, which is less than the critical angle, into the light guide plate LGP is not reflected by the emission surface TS of the light guide plate LGP, but passes through the emission surface TS and then is provided to the light conversion layer LO as described above.

However, according to exemplary embodiments of the inventive concept, the light incident at the angle, which is less than the critical angle, into the light guide plate LGP may be absorbed into the light absorber OM disposed on the first reflection area RA1 of the reflector RS. Thus, as illustrated in FIG. 9A, the display panel DP, according to exemplary embodiments of the inventive concept, may output the reference light PI having the target brightness from an area thereof overlapping the first reflection area RA1.

Referring to FIG. 9B, a horizontal axis represents a length (mm) from the first end S1 of the reflector RS in the first direction DR1, and a vertical axis represent color coordinates (Cx) of light emitted from the display panel DP overlapping the first reflection area RA1.

For example, when the printed patterns PN1, PN2, and PN3 disposed on the first reflection area RA1 are omitted, the display panel DP may output light having a first color coordinate PS1. Here, the first color coordinate PS1 may be a reference color coordinate with respect to a target image.

When the printed patterns PN1, PN2, and PN3 disposed on the first reflection area RA1 are provided with only the second color that is a yellow color, the display panel DP may output light having a fifth color coordinate PS5. The fifth color coordinate PS5 may further include a yellow component when compared to the first color coordinate PS1. As a result, when compared to the first color coordinate PS1 that is the reference color coordinate, the yellow color may be further visible from the display panel DP overlapping the first reflection area RA1.

According to an exemplary embodiment of the inventive concept, the printed patterns PN1, PN2, and PN3 may be provided as a color in which at least two colors are mixed. The printed patterns PN1, PN2, and PN3 may include a first color and a second color. For example, the first color may be a blue color, and the second color may be a yellow color.

For example, each of the printed patterns PN1, PN2, and PN3 may be provided as a mixed color of the first color and the second color. In this case, the first color may be provided at a ratio of about 99.9%, and the second color may be provided at a ratio of about 0.1%. As a result, as illustrated in FIG. 9B, the display panel DP may output light having a second color coordinate PS2.

For example, each of the printed patterns PN1, PN2, and PN3 may be provided as a mixed color of the first color and the second color. In this case, the first color may be provided at a ratio of about 99.95%, and the second color may be provided at a ratio of about 0.05%. As a result, as illustrated in FIG. 9B, the display panel DP may output light having a third color coordinate PS3.

For example, each of the printed patterns PN1, PN2, and PN3 may be provided as a mixed color of the first color and the second color. In this case, the first color may be provided at a ratio of about 99.98%, and the second color may be provided at a ratio of about 0.02%. As a result, as illustrated in FIG. 9B, the display panel DP may output light having a fourth color coordinate PS4.

As described above, according to exemplary embodiments of the inventive concept, a blue component contained in each of the printed patterns PN1, PN2, and PN3 may have a ratio of about 0.02% to about 0.1% when compared to the yellow component. However, this is merely an example, and thus, ratios of the first color and the second color may vary.

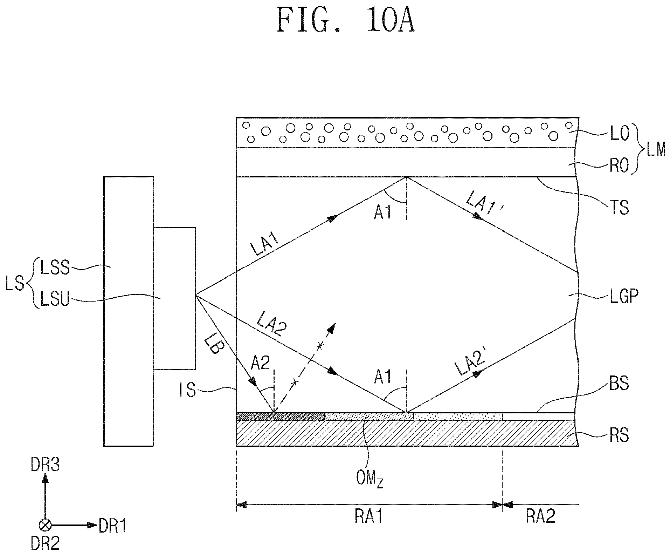

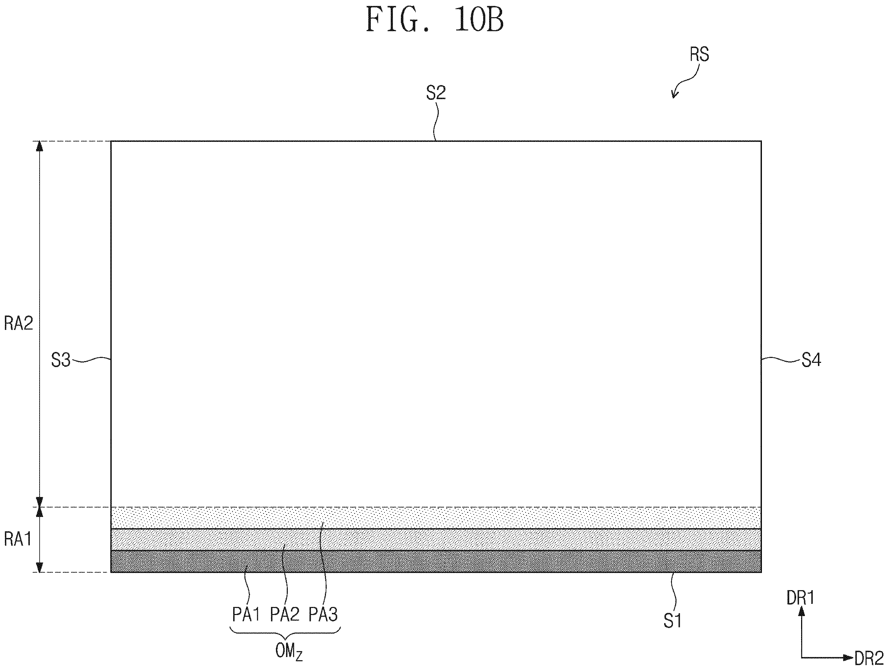

FIG. 10A is a cross-sectional view illustrating a portion of a display device according to an exemplary embodiment of the inventive concept. FIG. 10B is a plan view illustrating a reflector of FIG. 10A. The display device of FIG. 10A is substantially the same as the display device of FIG. 6A except for a light absorber OM. Thus, to the extent that detailed descriptions of various elements have been omitted, it may be assumed that these elements are at least similar to corresponding elements that have already been described. When compared to the light absorber OM of FIG. 7, a light absorber OMz might not be disposed on a reflector RS as a plurality of patterns, but may be disposed on the reflector PS as one constituent.

For example, referring to FIGS. 10A and 10B, the light absorber OMz may entirely overlap a first reflection area RA1. The light absorber OMz may absorb light received from an incident surface IS. The light absorber OMz may have a second color different from a first color to absorb first color light emitted from a light emitting element LSU. For example, the first color may be a blue color, and the second color may be a yellow color. However, embodiments of the inventive concept are not specifically limited as long as the second color is provided as a color that is capable of absorbing the first color light. For example, the light absorber OMz may be provided as a mixed color of the first color and the second color, which is described with reference to FIG. 9A.

As illustrated in FIG. 10B, the light absorber OMz may include first to third printed areas PA1 to PA3. According to exemplary embodiments of the inventive concept, a raw material having the second color may be applied to correspond to each of the first to third printed areas PA1 to PA3 on the first reflection area RA1 of the reflector RS to form the light absorber OMz.

According to an exemplary embodiment, the first printed area PA1 may be closer to a first end S1 of the reflector RS than the second printed area PA2 in a first direction DR1. An end of the first printed area PA1 may correspond to a first end S1 of the reflector RS. The second printed area PA2 may be closer to the first end S1 of the reflector RS than the third printed area PA3 in the first direction DR1.

For example, the first printed area PA1 may have a density greater than that of the second printed area PA2, and the second printed area PA2 may have a density greater than that of the third printed area PA3. For example, a raw material having the second color may be further contained in the first printed area PA1 than the second printed area PA2, and the raw material having the second color may be further contained in the second printed area PA2 than the third printed area PA3.

This arrangement may be used to take into account that the probability that light incident into a light guide plate LGP at an angle less than a critical angle is transmitted to the second printed area PA2 is relatively high when compared to the third printed area PA3, and the probability that the light incident into the light guide plate LGP is transmitted to the first printed area PA1 is relatively high when compared to the second printed area PA2.

As described above, the display panel DP, according to exemplary embodiments of the inventive concept, may output reference light PI having target brightness on an area overlapping the first reflection area RA1.

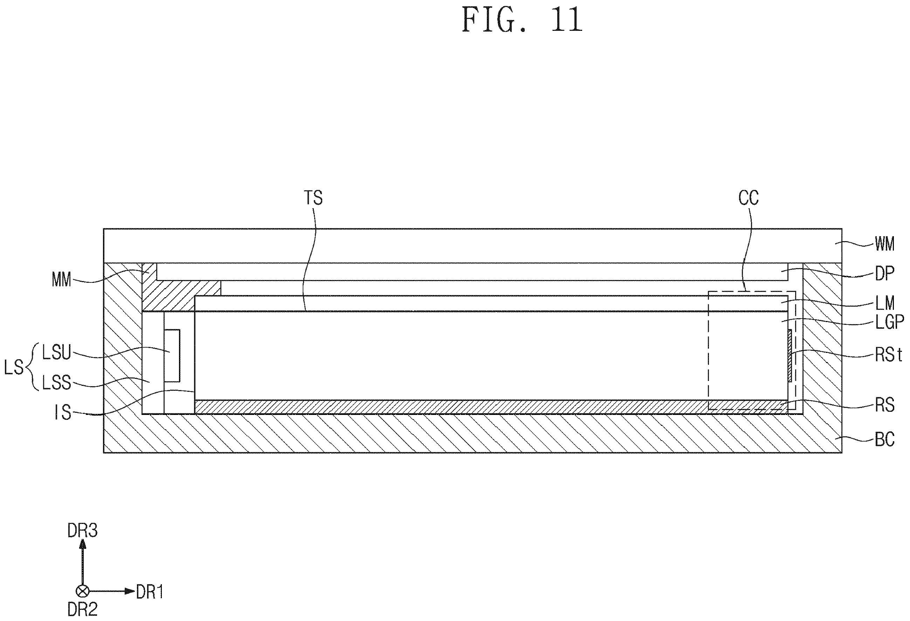

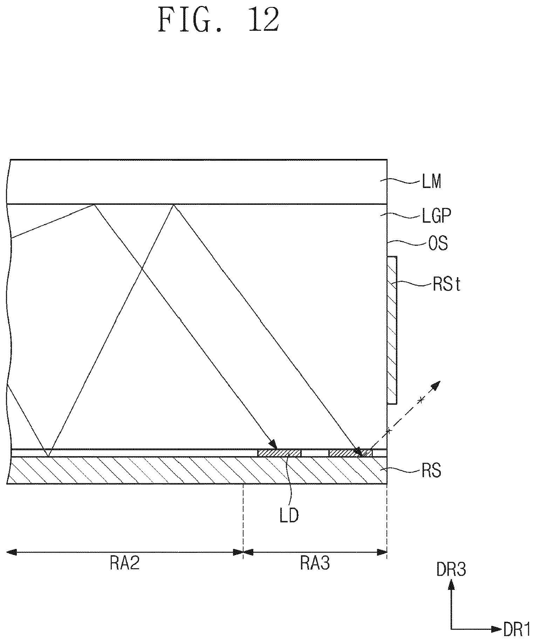

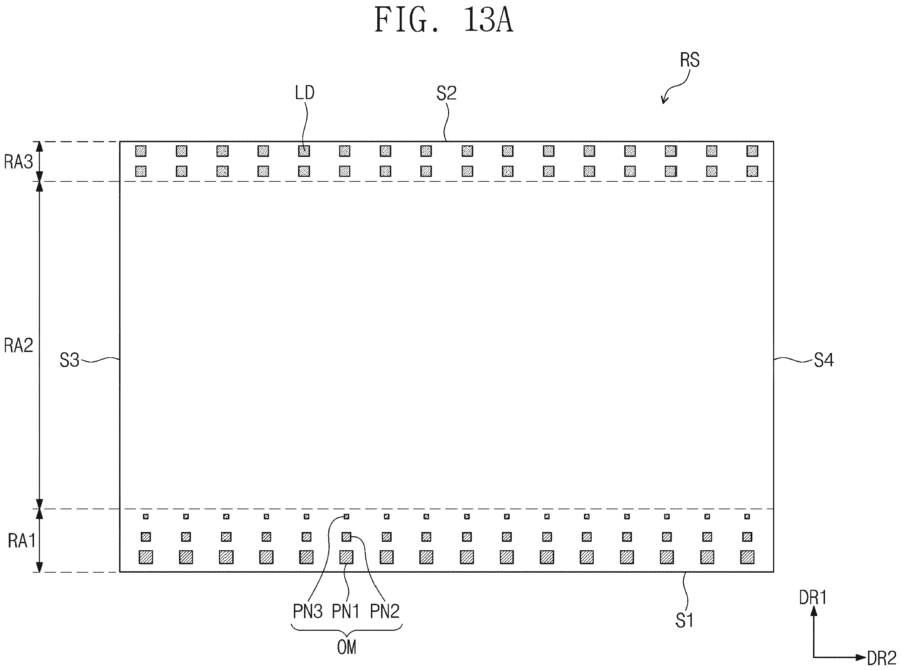

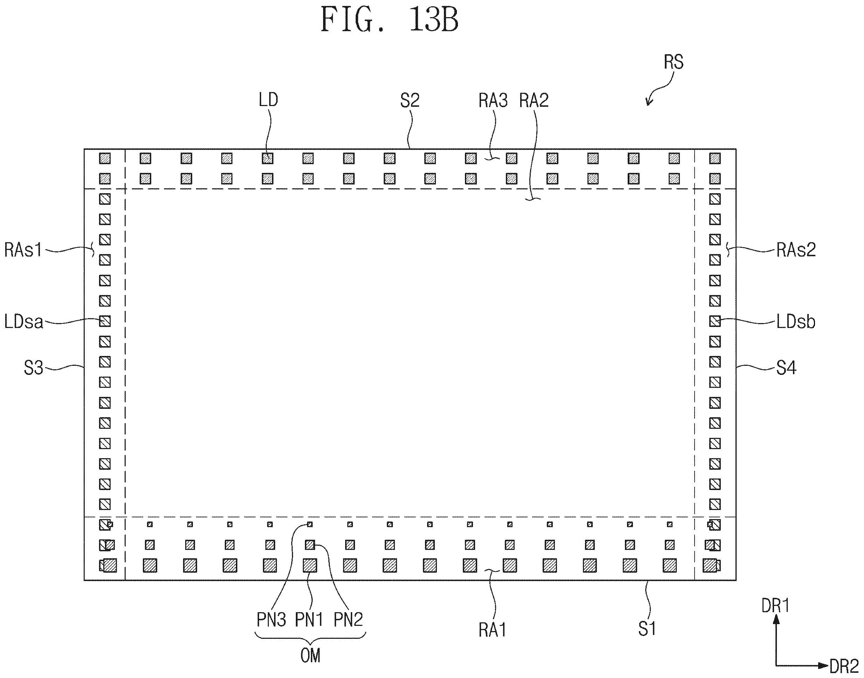

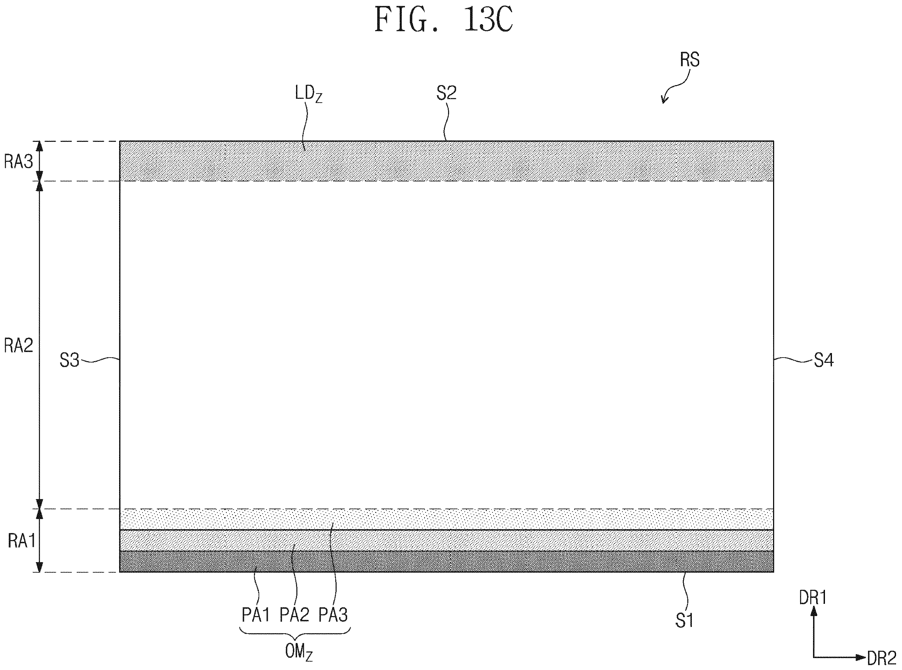

FIG. 11 is a cross-sectional view illustrating a display device according to an exemplary embodiment of the inventive concept. FIG. 12 is an enlarged view illustrating a region CC of FIG. 11. FIG. 13A is a plan view illustrating a reflector according to an exemplary embodiment of the inventive concept. FIG. 13B is a plan view illustrating a reflector according to an exemplary embodiment of the inventive concept. FIG. 13C is a plan view illustrating a reflector according to an exemplary embodiment of the inventive concept.

Referring to FIGS. 11 and 12, a display device DD may further include an auxiliary reflector RSt disposed on an opposite surface OS of a light guide plate LGP. The auxiliary reflector RSt may reflect light guided and transmitted from the light guide plate LGP again to the inside of the light guide plate LGP.

However, in a structure in which the auxiliary reflector RSt does not entirely overlap the opposite surface OS, a portion of light guided through the incident surface IS may pass through the opposite surface OS. In this case, light having the first color, which passes through the opposite surface OS, is reflected by the other constitute provided in the display device DD and then is transmitted to a display panel DP. As a result, leakage of light having the first color may occur on an area of the display panel DP, which overlaps the opposite surface OS.

However, according to an exemplary embodiment of the inventive concept, as illustrated in FIG. 13A, a plurality of sub color convertors LD may be disposed on a third reflection area RA3 of the reflector RS. For example, the third reflection area RA3 may be further defined on the reflector RS. The third reflection area RA3 may face the first reflection area RA1 in the first direction DR1 with the second reflection area RA2 interposed therebetween. An end of the third reflection area RA3 may correspond to a second end S2 of the reflector RS. The sub color convertors LD may be arranged in a second direction DR2. As illustrated in FIG. 13A, the sub color convertors LD arranged in two rows at a predetermined interval in the second direction DR2 are illustrated. However, embodiments of the inventive concept are not limited to the structure in which the sub color convertors LD are disposed on the third reflection area RA3. For example, the structure may be variously changed. According to an exemplary embodiment of the inventive concept, each of the sub color convertors LD may include a plurality of phosphors that absorb the first color light and output second color light. The phosphors provided in each of the sub color convertors LD, according to exemplary embodiments of the inventive concept, may be provided as YAG phosphors. The second color may be provided as a yellow color having a wavelength band of about 570 nm to about 590 nm. As a result, each of the YAG phosphors may convert blue light into yellow light. Thus, the first color light guided from the light guide plate LGP in the first direction DR1 may be emitted to the second color light by the sub color convertors LD disposed on the third reflection area RA3 of the reflector RS before passing through the opposite surface OS. As a result, the light leakage occurring on the area of the display panel DP, which is adjacent to the opposite surface OS, may be prevented by the first color light, and thus, the overall display of the display device DD may be made more even.

Also, according to exemplary embodiments of the inventive concept, the third reflection area RA3 may have a length of 0 to about 100 mm in the first direction DR1. Thus, the first reflection area RA1 may have a length greater than that of the third reflection area RA3 in the first direction DR1.

Referring to FIG. 13B, the reflector RS may further have a first sub reflection area RAs1 and a second sub reflection area RAs2 when compared to the reflector RS of FIG. 13A. The first sub reflection area RAs1 and the second sub reflection area RAs2 may face each other with the second reflection area RA2 interposed therebetween in the second direction DR2. The first sub reflection area RAs1 may have one end corresponding to a third end S3 of the reflector RS and the other end that is adjacent to one end of the second reflection area RA2. The second sub reflection area RAs2 may have one end corresponding to a fourth end S4 of the reflector RS and the other end that is adjacent to the other end of the second reflection area RA2.

According to an exemplary embodiment of the inventive concept, the display device DD further includes first sub color convertors LDsa disposed on the first sub reflection area RAs1 and second sub color convertors LDsb disposed on the second sub reflection area RAs2. The first sub color convertors LDsa and the second sub color convertors LDsb may be arranged in the first direction DR1. Embodiments of the inventive concept are not limited to the structure in which the first sub color convertors LDsa and the second sub color convertors LDsb are respectively disposed on the first sub reflection area RAs1 and the second sub reflection area RAs2. For example, the structure may be variously changed.

Each of the first sub color convertors LDsa and the second sub color convertors LDsb may include a plurality of phosphors that absorb the first color light to output the second color light. The phosphors contained in each of the first sub color convertors LDsa and the second sub color convertors LDsb, according to exemplary embodiments of the inventive concept, may be provided as YAG phosphors.

Also, at least a portion of the first sub color convertors LDsa may overlap printed patterns PN1, PN2, and PN3 on a plane of the reflector RS. Also, at least a portion of the second sub color convertors LDsb may overlap the printed patterns PN1, PN2, and PN3 on the plane of the reflector RS.

Although the plurality of sub color convertors LD are disposed on the third reflection area RA3 of the reflector RS in FIG. 13A, embodiments of the inventive concept are not limited thereto. For example, the plurality of sub color convertors LD might not be arranged at a predetermined interval on the third reflector RA3, but one color convertor, in which the plurality of color convertor entirely overlap each other, may be disposed on the third reflection area RA3 the reflector RS.

For example, referring to FIG. 13C, a light absorber OMz disposed on the first reflection area RA1 may be the light absorber OMz described with reference to FIG. 10b. Thus, to the extent that detailed description of various elements have been omitted, it may be assumed that these elements are at least similar to corresponding elements that have already been described.

According to an exemplary embodiment of the inventive concept, the sub color convertor LDz overlapping the entire third reflection area RA3 may be disposed on the reflector RS. For example, a raw material having the second color, which overlaps the entire third reflection area RA3, may be applied to the reflector RS. For example, the raw material having the second color may be provided as a YAG phosphor. For example, a film containing the raw material having the second color, which overlaps the entire third reflection area RA3, may be disposed on the third reflection area RA3 of the reflector RS.

Although the light absorber OMz described with reference to FIG. 10A is disposed on the first reflection area RA1 when the sub color convertor LDz is disposed on the third reflection area TA3 in FIG. 13C, embodiments of the inventive concept are not limited thereto. For example, when the sub color convertor LDz is disposed on the third reflection area TA3 in FIG. 13C, the light absorption member OMz described with reference to FIG. 7 may be disposed on the first reflection area RA1.

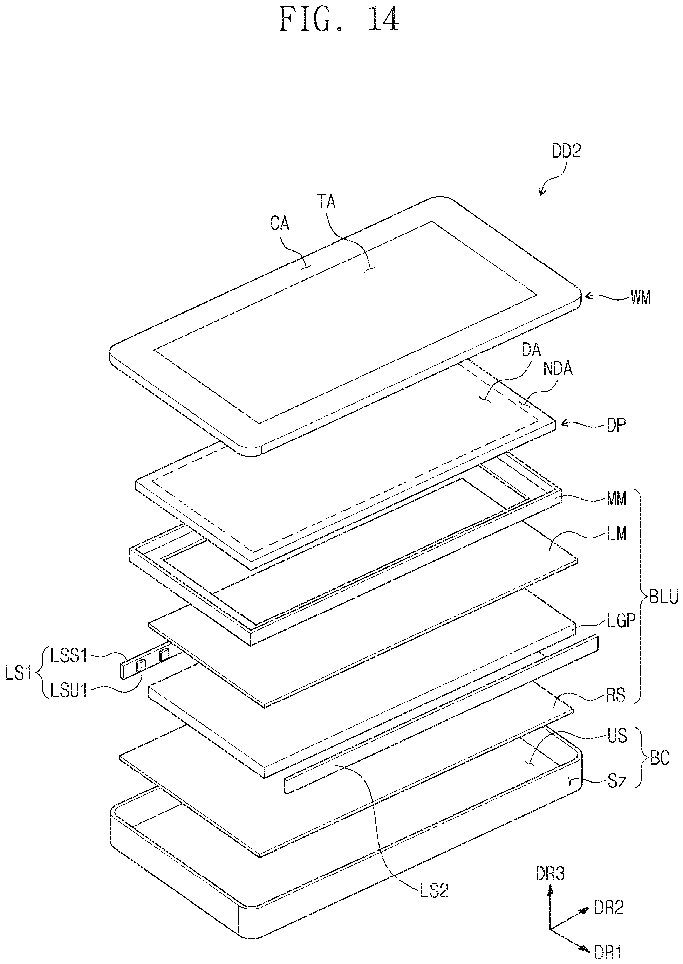

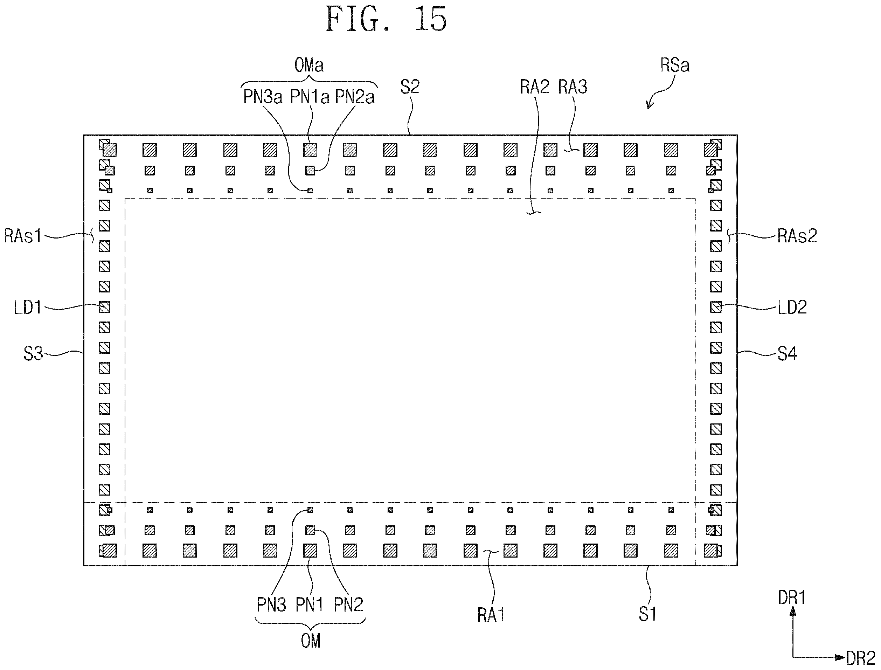

FIG. 14 is an exploded perspective view illustrating a display device according to an exemplary embodiment of the inventive concept. FIG. 15 is a plan view illustrating a reflector according to an exemplary embodiment of the inventive concept.

A display device DD2 of FIG. 14 may be substantially the same as the display device DD of FIG. 2 except that a second light source LS2 is additionally provided. Thus, for convenience of description, to the extent that detailed descriptions of various elements have been omitted, it may be assumed that these elements are at least similar to corresponding elements that have already been described.

Referring to FIG. 14, the display device DD2 includes a first light source LS1 and a second light source LS2, which face each other with a light guide plate LGP interposed therebetween in a first direction DR1. The first light source LS1 may be adjacent to one end of the light guide plate LGP, and the second light source LS2 may be adjacent to the other end of the light guide plate LGP, which face the one end of the light guide plate LGP, in the first direction DR1.

According to an exemplary embodiment of the inventive concept, each of the first light source LS1 and the second light source LS2 may output first color light having a blue color to the light guide plate LGP.

A reflector RS, according to exemplary embodiments of the inventive concept, may be substantially the same as the reflector RS of FIG. 13B except for a structure of the light emitting pattern. Thus, to the extent that detailed descriptions of various elements have been omitted, it may be assumed that these elements are at least similar to corresponding elements that have already been described.

Referring to FIG. 15, first printed patterns PN1, PN2, and PN3 having a second color that absorbs first color light may be disposed on a first reflection area RA1. The first printed patterns PN1, PN2, and PN3 may correspond to the printed patterns PN1, PN2, and PN3 of FIG. 7, respectively. For example, according to exemplary embodiments of the inventive concept, second printed patterns PN1a, PN2a, and PN3a, which absorb the first color light, may be disposed on a third reflection area RA3. The first printed patterns PN1, PN2, and PN3 disposed on the first reflection area RA1 may be defined as a first light absorber OM, and the second printed patterns PN1a, PN2a, and PN3a disposed on the third reflection area RA3 may be defined as a second light absorber OMa.

Each of the first printed patterns PN1, PN2, and PN3 and the second printed patterns PN1a, PN2a, and PN3a may absorb light incident at an angle less than a critical angle into the light guide plate LGP. Also, the first printed patterns PN1, PN2, and PN3 and the second printed patterns PN1a, PN2a, and PN3a may be spaced apart from each other with the second reflection area RA2 interposed therebetween. According to exemplary embodiments of the inventive concept, the first printed patterns PN1, PN2, and PN3 and the second printed patterns PN1a, PN2a, and PN3a may be symmetrical to each other with respect to the second reflection area RA2.

However, embodiments of the inventive concept are not limited thereto. According to an exemplary embodiment, the first printed patterns PN1, PN2, and PN3 and the second printed patterns PN1a, PN2a, and PN3a may be arranged in various manners with the second reflection area RA2 interposed therebetween.

Also, the reflector RS includes first sub color convertors LDsa disposed on a first sub reflection area (see reference symbol RAs1 of FIG. 13B) and second sub color convertors LDsb disposed on a second sub reflection area (see reference symbol RAs2 of FIG. 13B). Each of the first sub color convertors LDsa and the second sub color convertors LDsb may absorb first color light to emit second color light.

As discussed, embodiments can provide a display device comprising: a display panel; a light source configured to output light having a first color; a light guide plate disposed below the display panel and comprising an incident surface into which the first color light is incident, an opposite surface that is opposite to the incident surface, and an emission surface facing the display panel; a color convertor disposed between the display panel and the light guide plate, the color convertor configured to absorb the first color light and to output light having a color different from the first color to the display panel; a reflector disposed below the light guide plate, wherein a first reflection area and a second reflection area adjacent to the first reflection area are defined on the reflector; and a light absorber disposed on the first reflection area adjacent to the light source, the light absorber configured to absorb the first color light.

The light source may be located adjacent the incident surface, which may be a side surface of the light guide plate.

The first reflection area may be closer to the incident surface of the light guide plate than the second reflection area, and the second reflection area may be closer to the opposite surface of the light guide plate than the first reflection area.

An end of the first reflection area may correspond to a first end of the reflector.

The third reflection area may be adjacent the opposite surface of the light guide plate, and the second reflection area may be between the first reflection area and the third reflection area. An end of the third reflection area may correspond to a second end of the reflector.

The display device may a second light source configured to output the first color light. The color convertor may be configured to absorb the first color light from the second light source;

The display device may comprise a first light absorber disposed on the first reflection area adjacent to the first light source and configured to absorb the first color light; and a second light absorber disposed on the third reflection area adjacent to the second light source and configured to absorb the first color light.

Embodiments can also provide display device comprising: a display panel; a first light source configured to output a first color light; a second light source configured to output the first color light; a light guide plate disposed below the display panel and comprising an incident surface facing the first light source, an opposite surface facing the second light source, and an emission surface facing the display panel; a color convertor disposed between the display panel and the light guide plate and configured to absorb the first color light from the first light source and the second light source and to output light having a color different from the first color to the display panel; a reflector disposed below the light guide plate and on which a first reflection area, a second reflection area, and a third reflection area facing the first reflection area with the second reflection area therebetween are defined; a first light absorber disposed on the first reflection area adjacent to the first light source and configured to absorb the first color light; and a second light absorber disposed on the third reflection area adjacent to the second light source and configured to absorb the first color light.

According to exemplary embodiments of the inventive concept, the light leakage may be prevented from occurring on the edge area of the display panel. Therefore, the overall display of the display device may be made more even.

As described above, exemplary embodiment of the present invention have been disclosed in the drawings and the specification. Accordingly, various modifications from the arrangements shown and other equivalent embodiments are also possible within the scope of the present disclosure.

## Claims

1. A display device comprising:
a display panel;
a light source configured to output light having a first color;
a light guide plate disposed below the display panel and comprising an incident surface into which the first color light is incident, an opposite surface that is opposite to the incident surface, and an emission surface facing the display panel;
a color convertor disposed between the display panel and the light guide plate, the color convertor configured to absorb the first color light and to output light having a color different from the first color to the display panel;
a reflector disposed below the light guide plate, wherein a first reflection area and a second reflection area adjacent to the first reflection area are defined on the reflector; and
a light absorber disposed on the first reflection area adjacent to the light source, the light absorber configured to absorb the first color light.

2. The display device of claim 1, wherein the light absorber comprises a plurality of printed patterns spaced apart from each other on a plane of the reflector.

3. The display device of claim 2, wherein each of the plurality of printed patterns has a mixed color of the first color and a second color different from the first color, and
wherein there is more of the second color than the first color in the mixed color.

4. The display device of claim 2 or 3, wherein the plurality of printed patterns comprise first printed patterns and second printed patterns, each of the first printed patterns and the second printed patterns being arranged in a second direction crossing a first direction in which the incident surface and the opposite surface face each other, and
wherein the first printed patterns are closer to an end of the reflector adjacent to the light source than the second printed patterns.

5. The display device of claim 4, wherein each of the first printed patterns has a surface area greater than that of each of the second printed patterns on the plane of the reflector.

6. The display device of claim 4 or 5, wherein the plurality of printed patterns further comprises third printed patterns arranged in the second direction and spaced apart from the end of the reflector to a greater extent than the first and second printed patterns in the first direction, and
wherein a distance between each of the first printed patterns and each of the second printed patterns is less than that between each of the second printed patterns and each of the third printed patterns in the first direction.

7. The display device of any one of claims 1 to 6, wherein the light absorber entirely overlaps the first reflection area and has a second color that absorbs the first color light.

8. The display device of claim 7, wherein the light absorber comprises a first printed area adjacent to an end of the reflector and a second printed area adjacent to the first printed area, and
wherein the first printed area has a print density greater than that of the second printed area.

9. The display device of any one of claims 1 to 8, wherein the reflector further includes a third reflection area located away from the first reflector with the second reflection area disposed therebetween in a first direction in which the incident surface and the opposite surface face each other, and
wherein the reflector further comprises a plurality of sub color convertors disposed on the third reflection area, wherein the plurality of sub color convertors is configured to absorb the first color and emit light having a second color different from the first color.

10. The display device of claim 9, wherein each of the plurality of sub color convertors are spaced apart from each other on a plane of the reflector, and
wherein each of the plurality of sub color convertors comprises phosphors.

11. The display device of claim 10, wherein the reflector further includes a first sub reflection area and a second sub reflection area, which face each other with the second reflection area disposed therebetween, and the first sub reflection area and the second sub reflection area extend in a second direction crossing the first direction, and
wherein the display device further comprises:
a plurality of first sub color convertors disposed on the first sub reflection area and configured to absorb the first color light and to emit the light having the second color; and
a plurality of second sub color convertors disposed on the second sub reflection area and configured to absorb the first color light and to emit the light having the second color.

12. The display device according to claim 1, further comprising:
a second light source configured to output the first color light;
wherein the color convertor is configured to absorb the first color light from the second light source;
wherein the comprises a third reflection area, wherein the second reflection area is between the first reflection area and the third reflection area; the display device further comprising:
a second light absorber disposed on the third reflection area adjacent to the second light source and configured to absorb the first color light.

13. The display device of claim 12, wherein the light absorber comprises a plurality of first printed patterns that are spaced apart from each other on a plane of the reflector, and
wherein the second light absorber comprises a plurality of second printed patterns that are spaced apart from each other on the plane of the reflector.

14. The display device of claim 13, wherein a first sub reflection area and a second sub reflection area, which face each other with the second reflection area disposed therebetween, are further defined on the reflector in a second direction crossing the first direction, and
wherein the display device further comprises:
a plurality of first sub color convertors which are disposed on the first sub reflection area and are configured to absorb the first color light and to emit the light having the second color and each of which comprises a phosphor; and
a plurality of second sub color convertors which are disposed on the second sub reflection area and are configured to absorb the first color light and to emit the light having the second color and each of which comprises the phosphor.

15. The display device of any one of claims 12 to 14, wherein the light absorber entirely overlaps the first reflection area and absorbs the first color light and provides light having a second color, and
wherein the second light absorber entirely overlaps the second reflection area and absorbs the first color light and provides the light having the second color.
